Europäisches Patentamt

**European Patent Office**

**Office européen des brevets**

(19)

(11) Publication number: **0 005 937**
B1

(12) **EUROPEAN PATENT SPECIFICATION**

(45) Date of publication of patent specification: **25.05.83**

(51) Int. Cl.³: **B 62 D 55/14, B 60 B 3/06**

(21) Application number: **79300842.6**

(22) Date of filing: **16.05.79**

(54) A support wheel for a track laying vehicle.

(30) Priority: **26.05.78 GB 2345678**

(43) Date of publication of application:
**12.12.79 Bulletin 79/25**

(45) Publication of the grant of the patent:
**25.05.83 Bulletin 83/21**

(84) Designated Contracting States:
**BE CH DE FR IT LU NL SE**

(56) References cited:
**CA - A - 959 742**
**CH - A - 542 089**
**FR - A - 2 044 962**

(73) Proprietor: **GKN Group Services Limited**
**Group Head Office P.O. Box 55**
**Smethwick Warley West Midlands B66 2RZ (GB)**

(72) Inventor: **Edwards, Michael Frederick**
**8 Greenway Gardens Pattingham**
**Wolverhampton West Midlands (GB)**
Inventor: **Bird, Norman**
**20 Wootton Avenue Wednesfield**
**Wolverhampton West Midlands (GB)**
Inventor: **Carver, Bryan George**
**86 Leopold Avenue**
**Birmingham, B20 1ET (GB)**
Inventor: **Williams, Gwynne**
**105 Chillington Drive Codsall**
**Wolverhamton West Midlands (GB)**

(74) Representative: **Robertson, Bernard Collett et al,**
**Guest, Keen & Nettlefolds Limited Group Patents**
**& Licensing Department Group Head Office P.O.**
**Box 55**
**Smethwick Warley West Midlands, B66 2RZ (GB)**

Courier Press, Leamington Spa, England.

A support wheel for a track laying vehicle.

This invention relates to wheels and in particular to wheels for track-laying vehicles, that is vehicles which travel on endless tracks which extend beneath a number of support wheels and around one or more traction wheels.

The invention is concerned with the constructional details of support wheels for track laying vehicles.

For example, CH—A—542,089 discloses an aluminium track roller for tracked vehicles wherein each roller element comprises a central disc portion formed integrally with a rim cantilevered axially outwardly from one edge of the disc to provide adjacent parts of the disc and rim of L-shape. Such a construction necessitates a large amount of material to be present at the transition zone from the disc to the rim and/or the provision of reinforcing ribs at the disc/rim transition zone, otherwise insufficient strength is imparted to the rim.

CA—A—959,742 discloses a single piece wheel of T-shape in radial cross section but this wheel is intended for use in material handling equipment such as trucks or carts employed over short distances on smooth surfaces. However even in this construction it is still found necessary to provide stiffening ribs in the disc.

It is an object of the invention to provide an improved form of support wheel for a track laying vehicle.

In accordance with the present invention there is provided a support wheel for a track laying vehicle comprising a pair of one-piece wheel elements secured together, each wheel element comprising a disc formed integrally with a rim and characterised in that the adjacent parts of the disc and rim of each wheel element jointly define a T-shape in radial cross section, the disc being of dished configuration with the centre part of the disc extending axially of the wheel element beyond one of the edges of the rim; the two wheel elements being secured together at the centre part of the discs thereof to define a continuous groove between the edges of the rims for accommodating the horns of a track to be supported on the rims.

By arranging the adjacent parts of the disc and rim in each wheel element to be of T-shape so that the wheel disc merges with the rim in the central portion of the rim, it is possible more equally to balance the manner in which the disc is loaded by the rim as compared with the wheel arrangements of CH—A—542,089 in which the disc and rim merge at or adjacent one of the edges of the rim. Also, the T-shape of wheel in accordance with the invention, which effectively provides axially outwardly extending rim portions cantilevered from either side of the disc, enables an equivalent stiffness of wheel to be provided to that of Swiss Patent 542,089 whilst using much lighter gauge metal throughout. In the wheel of the present invention two half length portions of rim extend axially outwardly from each side of the disc whereby the unsupported length of rim is much less than that disclosed in CH—A—542,089 and the wheel need not therefore be provided with any other support whatsoever to the rim.

Also, because of the T-shape of the disc and rim in each wheel element, the edge of the rim adjacent the track horns, when the wheel is in use, is spaced an appreciable distance from the zone where the disc and rim merge. Thus an appreciable amount of wear can take place at the edge of the rim adjacent the horns without the strength of the wheel being greatly affected. This is an important consideration as the wear at this edge of the rim, due to contact with the track horns, can be severe.

It will also be appreciated that by making each wheel element in one piece the number of manufacturing steps required to produce the wheel element is reduced since it is not necessary to join the disc and rim.

Preferably each wheel element is made from an alloy of aluminium and/or magnesium. One of the 7000 series of alloys, which are aluminium, magnesium, zinc alloys, specified by the American Aluminum Association may conveniently be used. Reduction in the weight of the wheels of a track laying vehicle reduces the inertia forces generated in the vehicle suspension system and enables the vehicle to travel faster over rough ground.

A support wheel in accordance with the invention may be provided with a solid rubber tyre which is bonded onto the outer peripheral surface of the rim. The rim may be cylindrical or may be tapered so that the outer peripheral surface of the rim is closer to the rotary axis of the wheel at the edges of the rim than at the centre of the rim.

The edge of the rim of each wheel element which will be positioned adjacent to the track horns may be reinforced to resist the wear referred to above.

For example, means for resisting wear may be embedded in the appropriate rim edge, attached to the rim edge as replaceable strips or studs, or the edge may be overlaid with a hard facing. Specific examples of embedded wear resisting means are a steel hoop or wires, metal carbide filaments and/or particles, or metal carbide textiles. Alternatively rivet or screw attached replaceable wear strips or steel or other metal or metal carbides may be used. Studs of similar material to the wear strips referred to above can also be employed. If an overlaid hard facing is employed this can be provided by applying a hard material using flame or plasma spraying or electroplating.

Each wheel element may also include radially extending reinforcing ribs which extend on one or both sides of the disc between the disc and rim.

Each wheel element is also preferably provided with an accurately formed and positioned cylindrical datum surface which is concentric with the rotary axis of the wheel element and which is used to locate the wheel element while the tyre is moulded onto the rim.

One embodiment of the present invention will now be described, by way of example, with reference to the accompanying drawings in which:—

FIGURE 1 is a half-radial section through a support wheel embodying the present invention, and

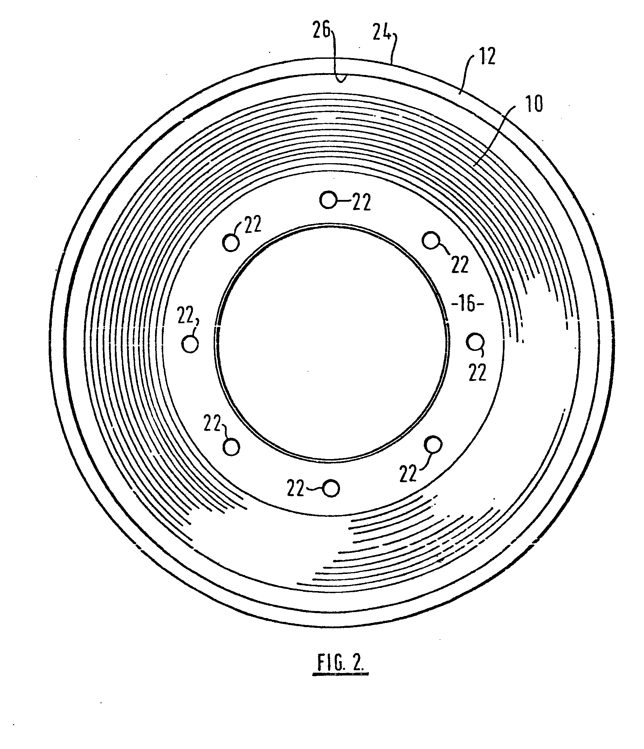

FIGURE 2 is a view in the direction of the arrow A of Figure 1 showing a complete wheel on a reduced scale.

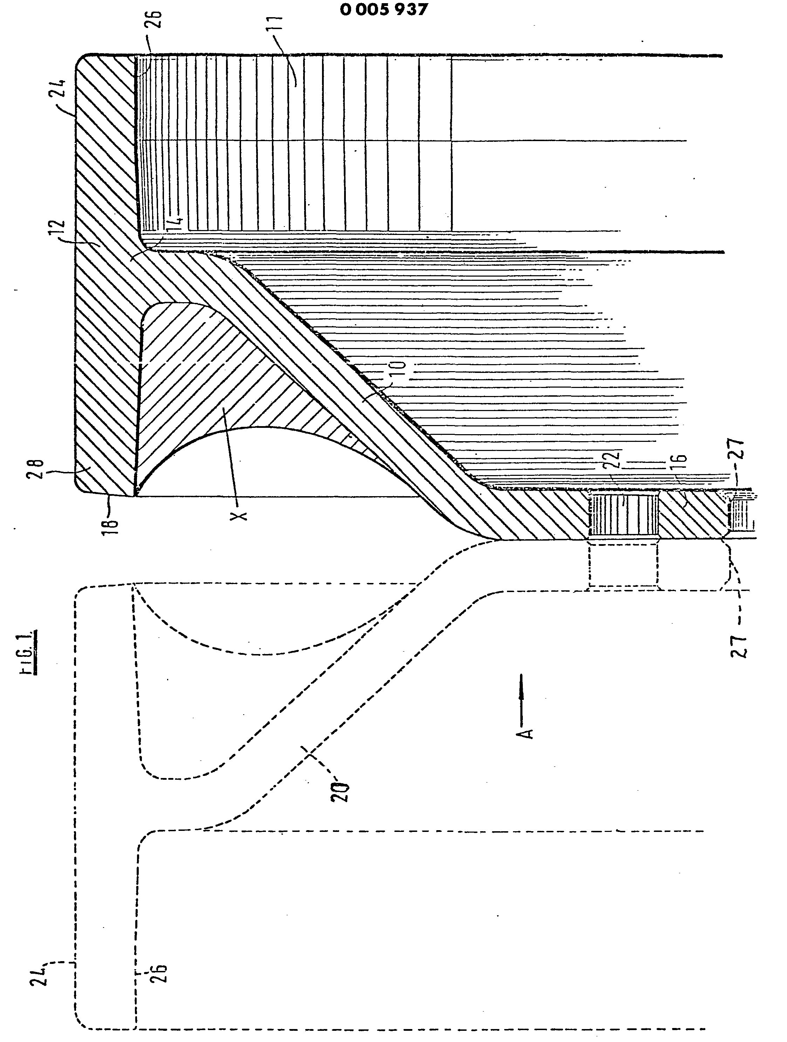

Referring to Figure 1 this shows a one piece aluminium wheel element for a track-laying vehicle comprising a dished disc portion 10 and a rim portion 12. The disc merges into the rim substantially in the axially central zone 14 of the rim so that the adjacent portions of the disc and rim together are of T-shape.

The centre portion 16 of the disc 10 extends axially beyond the edge 18 of the rim 12 so that if a second similar wheel element 20, shown in dotted lines in Figure 1, is secured to the wheel element 11 so that the wheel elements are in back-to-back configuration a continuous, circumferentially-extending groove is provided between the two wheel elements into which the horns on the track (not shown) are arranged to extend, and guide the track beneath the wheels. Bolt holes 22 are provided in the centre portion 16 for securing the two wheel elements together and also for securing them to a hub of the vehicle.

The outer peripheral surfaces of the rims are cylindrical as shown at 24. This assists in locating a solid rubber tyre (not shown) on each rim. The tyre is moulded in situ on the rim, the wheel element being lcoated in a mould during this moulding process using a cylindrical datum surface 26 on the inner side of the rim or the surface 27 adjacent the centre of the disc, in either case the surface being accurately located on the wheel element about the rotary axis thereof.

Each wheel element is formed from molten metal. The surfaces 24 and 26 and 27 may be machined on the wheel element after forming and prior to the moulding of the rubber tyre on the rim.

The edge portion 28 of the rim which will be adjacent the track horns may be reinforced using any of the arrangements described above. Also each wheel element may be reinforced by radially extending ribs on either side of the disc and which extend between the disc and rim portions of the wheel element. For example, such ribs may extend across the shaded portion X of Figure 1.

## Claims

1. A support wheel for a track laying vehicle comprising a pair of one-piece wheel elements secured together, each wheel element comprising a disc (10, 20) formed integrally with a rim (12, 24), characterised in that the adjacent parts of the disc (10, 20) and rim (12, 24) of each wheel element jointly define a T-shape in radial cross-section, the disc (10, 20) being of dished configuration with the centre part (16) of the disc extending axially of the wheel element beyond one of the edges (18) of the rim (12, 24); the two wheel elements being secured together at the centre part (16) of the discs (10, 20) thereof to define a continuous groove between the edges (18) of the rims (12, 24) for accommodating the horns of a track to be supported on said rims.

2. A support wheel as claimed in Claim 1 further characterised in that means exhibiting wear resistance greater than that of the one-piece wheel elements are provided at the edge (18) of the rim (12) of each wheel element.

3. A support wheel as claimed in either one of Claims 1 or 2 further characterised in that each wheel element is formed from an aluminium and/or magnesium alloy.

## Revendications

1. Une roue de support pour véhicule de pose de voies composée d'une paire d'éléments de roue en une pièce fixés l'un à l'autre chaque élément de roue se composant d'un disque formé avec jante intégrale, caractérisé par le fait que les parties adjacentes du disque (10) et de la jante (12) de chaque élément de roue sont ensemble d'une coupe radiale en forme de 'T' le disque (10) étant de profil concave, la partie centrale (16) du disque se prolongeant axialement et extérieurement de l'élément de roue au-delà de l'un des rebords (18) de la jante (12): les deux éléments de roue étant reliés l'un à l'autre à la partie centrale (16) des disques (10) correspondants de manière à décrire une rainure continue entre les rebords (18) des jantes (12) pour recevoir les cornes d'une voie supportée sur les jantes idoines.

2. Une roue de support telle que revendiquée dans la revendication 1 caractérisée par ailleurs par le fait que des moyens offrant une résistance a l'usure supérieure à celle des éléments de roue en une pièce sont fournis au rebord (18) de la jante (12) de chaque élément de roue.

3. Une roue de support telle que revendiquée dans l'une ou l'autre des revendications 1 ou 2 caractérisée par ailleurs par le fait que chaque élément de roue est formée d'un alliage d'aluminium et/ou de magnésium.

## Patentansprüche

1. Stützrad für ein Gleiskettenfahrzeug, wobei das Stützrad zwei miteinander verbundene einteilige Radelemente und jedes Radelement eine einteilig mit der Felge gerformte Scheibe aufweist, dadurch gekennzeichnet, dass die sich an die Scheibe (10) und die Felge (12) eines jeden Radelementes anschliessenden Teile zusammen in dem radialen Querschnitt T-förmig ausgeführt sind, wobei die Scheibe (10) schüsselförmig ist und das Mittelteil (16) der Scheibe sich von dem Radelement axial nach aussen über eine der Kanten (18) der Felge (12) hinaus erstreckt; die beiden Radelemente sind in dem Mittelteil (16) der Scheiben (10) miteinander verbunden, um eine fortlaufende Rille zwischen den Kanten (18) der Felgen (12) zur Aufnahme der von den genannten Felgen getragenen Bahnhörner zu bilden.

2. Stützrad nach Anspruch 1, dadurch gekennzeichnet, dass die Kantel (18) der Felge (12) eines jeden Radelementes mit Mitteln versehen werden, deren Verschleissfestigkeit grösser ist als die der einteiligen Radelemente.

3. Stützrad nach Anspruch 1 oder 2, dadurch gekennzeichnet, dass jedes Radelement aus einer Aluminium- und/oder Magnesiumlegierung geformt wird.

FIG. 1.

0005 937

FIG. 2.